# EUROPÄISCHE PATENTANMELDUNG

(11) **EP 4 810 195 A1**
(43) Veröffentlichungstag der Anmeldung: **23.09.2026**
(21) Anmeldenummer: 25164700.4
(22) Anmeldetag: 19.03.2025
(51) Int. Cl.: B23Q 11/08, A61C 13/00, F16P 1/00

(54) **FALTENBALG ZUR TRENNUNG ZWEIER RÄUME UND BEARBEITUNGSMASCHINE**

(71) Anmelder: vhf camfacture Aktiengesellschaft, 72119 Ammerbuch (DE)
(72) Erfinder: PARTSCH, Leoni Nora, 75394 Oberreichenbach (DE)
(74) Vertreter: Stock, Johannes

(57) **Zusammenfassung**

Die Erfindung betrifft einen Faltenbalg (10) zur Trennung zweier Räume, insbesondere in einer Bearbeitungsmaschine (1), insbesondere in einer Dentalbearbeitungsmaschine, wobei der Faltenbalg (10) eine Membran (11) und ein von der Membran (11) separat ausgebildetes, elastisches Spannmittel (20) umfasst, wobei die Membran (11) mindestens zweidimensional verformbar ist, wobei der Faltenbalg (10) eine Aufnahme (14) zur Anbindung der Membran (11) an ein bewegbares Bauteil, insbesondere der Bearbeitungsmaschine (1), aufweist, wobei das elastische Spannmittel (20) derart mit der Membran (11) wirkverbunden ist, dass die Membran (11) durch das elastische Spannmittel (20) gerafft wird.

## Beschreibung

Die Erfindung betrifft einen Faltenbalg gemäß dem Oberbegriff des Anspruchs 1. Ferner betrifft die Erfindung eine Bearbeitungsmaschine.

Aus dem Stand der Technik ist eine Bearbeitungsmaschine, insbesondere eine Dentalbearbeitungsmaschine, bekannt, dessen Antriebseinheit vom Bearbeitungsraum durch einen Faltenbalg getrennt ist. Die Abtrennung von Bearbeitungsraum und Antriebstechnik ist erforderlich, da andernfalls die Antriebstechnik durch beispielsweise Späne, Kühlflüssigkeit und dgl. verschmutzen würde. Da sich das Werkzeug im Bearbeitungsraum permanent bewegt, ist die räumliche Trennung von Bearbeitungsraum und Antriebstechnik schwierig. Hierfür werden bekanntermaßen Faltenbälge eingesetzt, die üblicherweise als Gummibalg und Lamellenbalg ausgebildet sind.

Nachteilig an einem Gummibalg ist eine vergleichsweise kurze Lebensdauer. Durch die ständige Bewegung des Gummibalgs bei Bearbeitungsvorgängen unterliegt dieser einer hohen Belastung, die nach geraumer Zeit zu Rissen im Gummibalg führen kann. Ein Austausch des Gummibalgs ist dann erforderlich. Um ausreichend Bewegungsspielraum zu ermöglichen, benötigt ein Gummibalg Material, dessen Abmessungen einem Vielfachen der Abmessungen des gewünschten Verfahrbereiches entsprechen. Das Material des Gummibalgs wird bei den Verfahrbewegungen des Werkzeuges entsprechend verformt. Beim Falten des Gummibalgs nimmt der Gummibalg durch das gefaltete Material viel Raum ein, welcher in der Bearbeitungsmaschine zur Verfügung gestellt werden muss. Faltet sich das Material nicht wie gewünscht zusammen, kann sogar eine Kollision zwischen Gummibalg und Teilen der Bearbeitungsmaschine folgen.

Nachteilig an einem Lamellenbalg ist das geringe Bewegungsspektrum. Bewegt sich das Werkzeug mehrdimensional im Raum, sind auch mehrere Lamellenbälge erforderlich. Die Führung dieser mehrerer Lamellenbälge ist aufwendig und damit auch kostspielig. Zudem ist ein Lamellenbalg weder staubdicht noch wasserdicht. Soll eine derartige Dichtigkeit vorgesehen sein, ist der Lamellenbalg mit zusätzlichen Systemen zu kombinieren.

Es ist daher Aufgabe der Erfindung, einen Faltenbalg anzugeben, der langlebig, günstig und vielseitig einsetzbar ist.

Diese Aufgabe wird durch einen Faltenbalg gemäß den Merkmalen des Anspruches 1 gelöst.

Der erfindungsgemäße Faltenbalg ist zur Trennung zweier Räume vorgesehen. Die zwei Räume können insbesondere in einer Bearbeitungsmaschine, insbesondere in einer Dentalbearbeitungsmaschine, vorgesehen sein. Alternativ kann es auch vorgesehen sein, dass einer der beiden Räume einer Maschine zugewiesen ist, während der andere der beiden Räume die Maschinenumgebung ist. Eine Maschine kann beispielsweise eine Bearbeitungsmaschine, ein Roboter oder dgl. Maschine sein. Der Faltenbalg umfasst eine Membran und ein von der Membran separat ausgebildetes, elastisches Spannmittel. Die Membran ist mindestens zweidimensional verformbar. Der Faltenbalg weist eine Aufnahme zur Anbindung der Membran an ein bewegbares Bauteil, insbesondere der Bearbeitungsmaschine, auf. Das elastische Spannmittel ist derart mit der Membran wirkverbunden, dass die Membran durch das elastische Spannmittel gerafft wird.

Eine "Membran" im Sinne der vorliegenden Erfindung ist eine dünne Trennschicht, die die Fähigkeit zur Abtrennung besitzt und eine selektive Durchlässigkeit aufweist.

Der Erfindung liegt die Erkenntnis zugrunde, dass der erhöhte Verschleiß des Gummibalgs im Wesentlichen auf seine Formsteifigkeit zurückzuführen ist. Diese hält den Gummibalg zwar in seiner Form, kann aber bei Bewegung des Gummibalgs zu hohen Spannungen im Balg führen. In Folge können frühzeitig Risse im Gummibalg auftreten.

Der erfindungsgemäße Faltenbalg ist nun derart ausgebildet, dass die Trennung der zwei Räume durch eine Membran erfolgt, während die Raffung der Membran durch ein elastisches Spannmittel vorgesehen ist. Somit sind die Funktionen Trennung und Formsteifigkeit auf verschiedene Bauteile aufgeteilt. Die Membran selbst muss daher nicht mehr formsteif ausgebildet sein, sondern wird von dem Spannmittel in Form gehalten. Die Belastung der Membran ist deutlich geringer, wodurch hohe Spannungen in der Membran und damit auch frühzeitig auftretende Risse vermieden werden können.

Die Membran ist mindestens mehrdimensional verformbar und kann daher auch Bewegungen in mindestens zwei Raumrichtungen ausführen. Bevorzugt ist die Membran in drei, insbesondere in fünf, ganz insbesondere in sechs Dimensionen verformbar. Somit kann der Faltenbalg mit seiner Membran in jeder handelsüblichen Bearbeitungsmaschine eingesetzt werden. Der Einsatz mehrerer Faltenbälge in einer Maschine, wie bei einem Lamellenbalg, ist somit nicht mehr erforderlich.

Es ist insbesondere vorgesehen, dass die Membran mindestens eine erste Membranlage umfasst, wobei die erste Membranlage insbesondere aus einem Flächenmaterial, insbesondere einem textilen Flächenmaterial oder einer Folie, ausgebildet ist. Derartiges Flächenmaterial besitzt eine nur geringe Formsteifigkeit oder keine Formsteifigkeit. Die auftretenden Spannungen in dem Flächenmaterial bei dessen Verformung sind daher sehr gering. In der bevorzugten Ausführungsform ist das Flächenmaterial nicht formsteif, so dass bei dessen Verformung keine Spannungen auftreten. Bevorzugt umfasst die Membran mindestens eine zweite Membranlage, wobei die zweite Membranlage insbesondere aus einem Flächenmaterial, insbesondere einem textilen Flächenmaterial oder einer Folie, ausgebildet ist. Die Membran kann auch mehr als zwei Membranlagen umfassen. Die mehreren Membranlagen können insbesondere unterschiedliche Größen aufweisen. Die mehreren Membranlagen können insbesondere aus verschiedenen Werkstoffen gebildet sein. Auch eine Kombination aus textilem Flächenmaterial und einer Folie kann als Membran zweckmäßig sein. Vorteilhaft weist das textile Flächenmaterial eine Beschichtung auf.

Es ist bevorzugt vorgesehen, dass die mindestens eine erste Membranlage und/oder die mindestens eine zweite Membranlage pyramidenstumpfartig oder kegelstumpfartig ausgebildet ist. Auch andere Geometrien der Membran, beispielsweise eine Kombination aus einem Pyramidenstumpf und einem Kegelstumpf, können zweckmäßig sein.

Es ist insbesondere vorgesehen, dass die Membran eine Halteeinheit umfasst, über die das elastische Spannmittel an der ersten Membranlage und/oder der zweiten Membranlage gehalten ist. Die Halteeinheit kann an der ersten Membranlage und/oder der zweiten Membranlage angeordnet, insbesondere ausgebildet, sein. Die Halteeinheit kann auch durch die erste Membranlage und die zweite Membranlage gebildet sein. In alternativer Ausführung des Faltenbalgs kann das elastische Spannmittel auch unmittelbar in einer Membranlage gehalten sein. In einer solchen Ausführung wäre eine Halteeinheit für das elastische Spannmittel nicht erforderlich. Auch eine Kombination, nämlich dass das elastische Spannmittel zumindest teilweise über die Halteeinheit und zumindest teilweise direkt an der ersten Membranlage und/oder zumindest teilweise an der zweiten Membranlage gehalten ist, kann zweckmäßig sein.

Es ist vorteilhaft vorgesehen, dass die Halteeinheit ein Tunnelzug ist. Der Tunnelzug ist insbesondere durch eine Verbindung der ersten Membranlage und der zweiten Membranlage gebildet. Die Verbindung ist insbesondere als Naht ausgebildet. Die Verbindung kann alternativ auch durch eine Klebung, eine Schweißung, eine Nietung oder dgl. Verbindung ausgebildet sein. Bevorzugt ist das Spannmittel im Tunnelzug beweglich gehalten. So verteilt sich die Verformung des Spannmittels über die gesamte Länge des Spannmittels. Das Spannmittel kann insbesondere im Tunnelzug verschoben werden. Lokale Überlastungen des Spannmittels können somit vermieden werden. Dies begünstigt die Lebensdauer des Spannmittels.

Der Tunnelzug weist insbesondere mäanderförmige Bahnen auf. Durch die Ausbildung der mäanderförmigen Bahnen verläuft der Tunnelzug in mehreren Raumrichtungen, vorzugsweise in drei Raumrichtungen. Das Spannmittel verläuft folglich auch in mehreren, insbesondere drei Raumrichtungen, wodurch die Raffung der Membran ebenfalls in mehreren Raumrichtungen, insbesondere drei Raumrichtungen, wirkt. Hier können verschiedene Muster durch die Ausbildung der mäanderförmigen Bahnen zweckmäßig sein. Die mäanderförmigen Bahnen sind vorzugsweise derart ausgebildet, dass sich diese in aufgespanntem Zustand der Membran in mindestens zwei, insbesondere drei Raumrichtungen erstrecken. Somit kann eine effektive Raffung der Membran erzielt werden, wodurch Bauraum eingespart werden kann.

Es ist insbesondere vorgesehen, dass das elastische Spannmittel ein Gummiband, insbesondere lediglich ein einziges Gummiband ist, wobei das Gummiband im Tunnelzug verschiebbar, insbesondere vollständig verschiebbar, gehalten ist. Die Verformung des Gummibands kann sich somit über das gesamte Gummiband verteilen. Bevorzugt ist das Gummiband an seinen beiden Enden miteinander verknotet. Alternativ kann das Gummiband an seinen Enden auch an der Membran selbst befestigt sein oder anderweitig mit sich selbst verbunden werden, beispielsweise durch eine Klebung. Zumindest die vollständige Verschiebbarkeit des Gummibandes im Tunnelzug ist dann nicht mehr gewährleistet.

Das Gummiband umfasst insbesondere einen elastischen Kern und eine Ummantelung des elastischen Kerns, wobei die Ummantelung als Überlastschutz des elastischen Kerns und zum Abgleiten auf der Halteeinheit, auf der mindestens einen ersten Membranlage und/oder auf der mindestens einen zweiten Membranlage ausgebildet ist. Durch den Überlastschutz wird ein Überdehnen und/oder Reißen des elastischen Kerns vermieden. Der Ummantelung werden folglich mehrere Funktionen zu Teil. Sowohl der Überlastschutz als auch die Verbesserung der Gleiteigenschaften wirken sich vorteilhaft auf die Lebensdauer des Gummibandes und somit vorteilhaft auf die Lebensdauer des erfindungsgemäßen Faltenbalgs aus. Ferner können durch die Ummantelung Scheuerschäden an dem elastischen Kern vermieden werden, die durch die Relativbewegungen zur Membran auftreten könnten.

Die Aufnahme des Faltenbalgs ist bevorzugt becherförmig ausgebildet. Die Aufnahme umgibt wiederum die Werkzeugaufnahme, beispielsweise einer Bearbeitungsmaschine. Die Aufnahme des Faltenbalgs ist insbesondere aus einem formstabilen Werkstoff ausgebildet. Die Aufnahme umfasst insbesondere eine Öffnung. Die Aufnahme kann dann auf einfache Weise an der Werkzeugaufnahme befestigt, insbesondere auf die Werkzeugaufnahme aufgesteckt, werden. Die Werkzeugaufnahme ragt insbesondere durch die Öffnung der Aufnahme des Faltenbalgs.

Eine weitere Aufgabe der Erfindung ist es, eine Bearbeitungsmaschine anzugeben, die kostengünstig und wartungsarm ist.

Diese Aufgabe wird durch eine Bearbeitungsmaschine gemäß den Merkmalen des Anspruches 11 gelöst.

Die erfindungsgemäße Bearbeitungsmaschine, insbesondere

Dentalbearbeitungsmaschine, umfasst eine Werkzeugaufnahme zum Halten eines Werkzeuges, wobei das Werkzeug zur additiven und/oder subtraktiven Bearbeitung eines Werkstückes vorgesehen ist, einen Antriebsraum mit einer Antriebseinheit zur Bewegung der Werkzeugaufnahme und/oder zur Bewegung des Werkzeuges, einen Bearbeitungsraum, in dem das Werkstück bearbeitet wird und einen erfindungsgemäßen Faltenbalg, wobei der Faltenbalg den Antriebsraum und den Bearbeitungsraum voneinander trennt. Der Faltenbalg umfasst eine Membran und ein von der Membran separat ausgebildetes, elastisches Spannmittel. Die Membran ist mindestens zweidimensional verformbar. Der Faltenbalg weist eine Aufnahme zur Anbindung der Membran an ein bewegbares Bauteil der Bearbeitungsmaschine auf. Das elastische Spannmittel ist derart mit der Membran wirkverbunden, dass die Membran durch das elastische Spannmittel gerafft wird.

Weitere Merkmale der Erfindung ergeben sich aus der Zeichnung, in der nachfolgend Ausführungsbeispiele der Erfindung dargestellt sind. Es zeigen:
- Fig. 1: in einer schematischen, perspektivischen Darstellung eine Bearbeitungsmaschine,
- Fig. 2: in einer schematischen, perspektivischen Darstellung der Innenraum einer Bearbeitungsmaschine mit einem erfindungsgemäßen Faltenbalg,
- Fig. 3: in einer schematischen Schnittdarstellung der Faltenbalg angebunden an der Bearbeitungsmaschine,
- Fig. 4a und 4b: in einer schematischen, ausschnittsweisen Schnittdarstellung die Anbindungen des Faltenbalgs an der Bearbeitungsmaschine,
- Fig. 5: in einer schematischen, ausschnittsweisen Schnittdarstellung eine weitere Ausführungsform der Anbindungen des Faltenbalgs an der Bearbeitungsmaschine,
- Fig. 6a bis 6c: in verschiedenen Darstellungen eine Ausführung des erfindungsgemäßen Faltenbalgs,
- Fig. 7: in einer perspektivischen, ausschnittsweisen Schnittdarstellung der Faltenbalg mit Gummiband,
- Fig. 8a bis 8c: in verschiedenen Darstellungen eine weitere Ausführung des erfindungsgemäßen Faltenbalgs und
- Fig. 9a bis 9c: in verschiedenen Darstellungen eine zusätzliche Ausführung des erfindungsgemäßen Faltenbalgs.

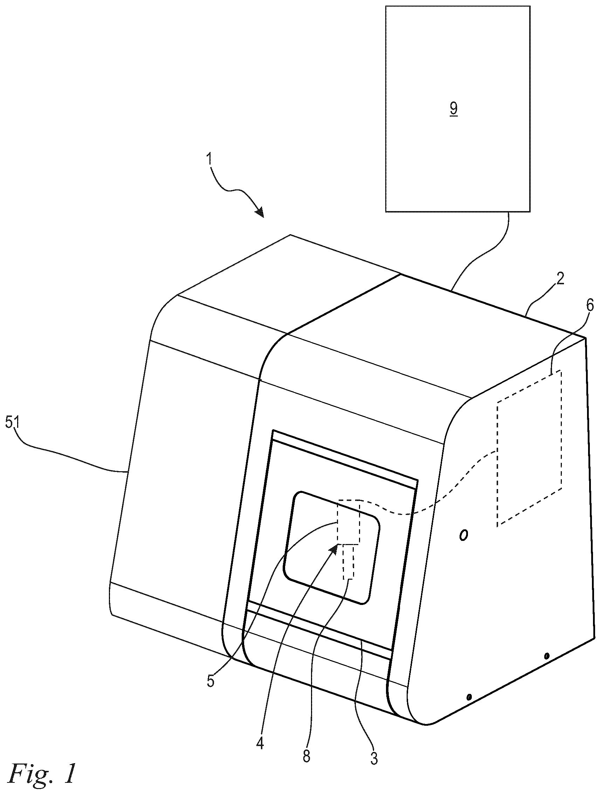

In Fig. 1 ist perspektivisch eine Bearbeitungsmaschine 1, insbesondere eine Dentalbearbeitungsmaschine, dargestellt, die im Ausführungsbeispiel als eine Dentalfräsmaschine ausgebildet ist. Die Bearbeitungsmaschine 1 ist zur Herstellung eines Zahnersatzes, insbesondere zum Fertigen von Zahnkronen, Brücken oder dergleichen Zahnersatz, vorgesehen. Die Bearbeitungsmaschine 1 weist ein Gehäuse 2 auf, das einen Innenraum der Bearbeitungsmaschine 1 begrenzt. An dem Gehäuse 2 der Bearbeitungsmaschine 1 ist eine Ladetüre 3 angeordnet. Über die Ladetüre 3 kann eine Öffnung des Gehäuses 2 freigegeben oder geschlossen werden. Nach Öffnen der Ladetüre 3 ist der Zugang zu dem Innenraum der Bearbeitungsmaschine 1 offen, um beispielsweise ein Werkstück 50 einzulegen oder herauszunehmen. In der Bearbeitungsmaschine 1 ist eine Spindeleinheit 4 angeordnet, wobei die Spindeleinheit 4 im bevorzugten Ausführungsbeispiel über eine nicht näher dargestellte Antriebseinheit im Raum translatorisch wie auch rotatorisch verstellbar ist. Im vorliegenden Ausführungsbeispiel ist die Bearbeitungsmaschine 1 insbesondere derart ausgebildet, dass diese eine 5-Achs-Simultanbearbeitung durchführen kann. In einem alternativen Ausführungsbeispiel kann die Antriebseinheit auch so aufgebaut sein, dass die Spindeleinheit 4 lediglich translatorisch oder rotatorisch verstellbar ist.

Die Bearbeitungsmaschine 1 umfasst eine in Fig. 1 schematisch dargestellte Steuereinheit 6. Die in Fig. 1 gezeigte Spindeleinheit 4 umfasst eine Spindel 8 und einen Elektromotor 5. Der Elektromotor 5 ist über einen elektrischen Anschluss der Spindeleinheit 4 mit der Steuereinheit 6 verbunden. Die Steuereinheit 6 dient unter anderem zur elektrischen Versorgung und Steuerung der Spindeleinheit 4 sowie der Antriebseinheit.

Die Dentalbearbeitungsmaschine 1 umfasst eine nicht näher dargestellte Werkstückaufnahme, in der das Werkstück 50 fixiert, insbesondere eingespannt, ist.

Wie in Fig. 1 gezeigt, ist im Ausführungsbeispiel die Bearbeitungsmaschine 1 mit einer Rechnereinheit 9 gekoppelt. Die Rechnereinheit 9 umfasst vorzugsweise ein CAD-System, an welchem ein Zahnersatz modelliert wird. Die Rechnereinheit 9 umfasst insbesondere ein CAM-System, an welchem eine NC-Programmierung vorgenommen werden kann. Mit der NC-Programmierung werden verschiedene Parameter der mechanischen Bearbeitung mittels der Dentalbearbeitungsmaschine 1 festgelegt. Ist die NC-Programmierung abgeschlossen, wird diese an die Steuereinheit 6 übergeben. Selbstverständlich können das CAD-System sowie das CAM-System ein einziges System, insbesondere Softwareprogramm, sein.

Wie in Fig. 1 gezeigt, umfasst das bevorzugte Ausführungsbeispiel der Bearbeitungsmaschine 1 einen Werkstückwechsler 51, in welchem mehrere Werkstücke 50 beziehungsweise Rohlinge lagerbar sind. Zur Bearbeitung eines Rohlings greift die Werkstückaufnahme auf den Werkstückwechsler 51 zu und entnimmt einen geeigneten Rohling. Die Bearbeitungsmaschine 1 kann in einer alternativen Ausführung auch ohne Werkstückwechsler 51 ausgebildet sein, wodurch ein manuelles Einlegen bzw. Herausnehmen des Rohlings erforderlich ist.

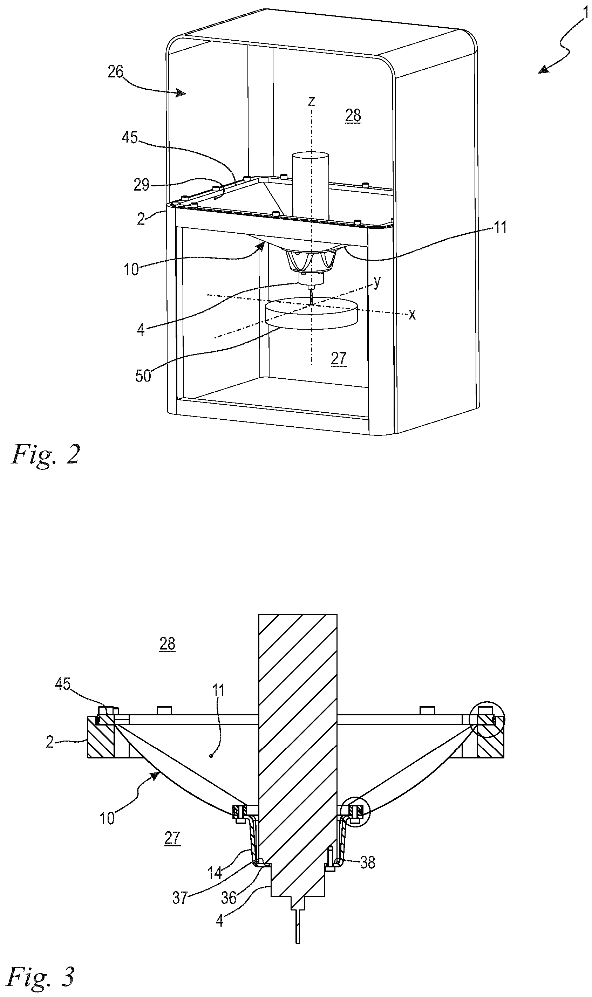

In Fig. 2 ist ein Innenraum 26 der Bearbeitungsmaschine 1 schematisch dargestellt. Wie in Fig. 2 gezeigt, umfasst die Bearbeitungsmaschine 1 einen Faltenbalg 10. Der Faltenbalg 10 ist zur Trennung zweier Räume ausgebildet. In der vorliegenden Ausführung der erfindungsgemäßen Bearbeitungsmaschine 1 sind die zwei Räume ein Bearbeitungsraum 27 und ein Antriebsraum 28. Im Bearbeitungsraum 27 wird das Werkstück 50 bearbeitet. Im Antriebsraum 28 ist die nicht näher dargestellte Antriebseinheit angeordnet. Der Bearbeitungsraum 27 der Bearbeitungsmaschine 1 und der Antriebsraum 28 der Bearbeitungsmaschine 1 sind durch den Faltenbalg 10 voneinander getrennt. Die im Antriebsraum 28 angeordnete Antriebseinheit sowie etwaige Elektronik sind von im Bearbeitungsraum 27 entstehenden Schmutzpartikeln, beispielsweise Späne oder Schleifstaub, durch den Faltenbalg 10 geschützt.

Wie in Fig. 2 gezeigt, ragt die Spindeleinheit 4 durch den Faltenbalg 10 hindurch. Der Faltenbalg 10 ist an der Spindeleinheit 4 derart angebunden, dass auch bei Bewegungen der Spindeleinheit 4 der Bearbeitungsraum 27 und der Antriebsraum 28 durch den Faltenbalg 10 voneinander getrennt sind. Hierfür ist der Faltenbalg 10 verformbar ausgebildet.

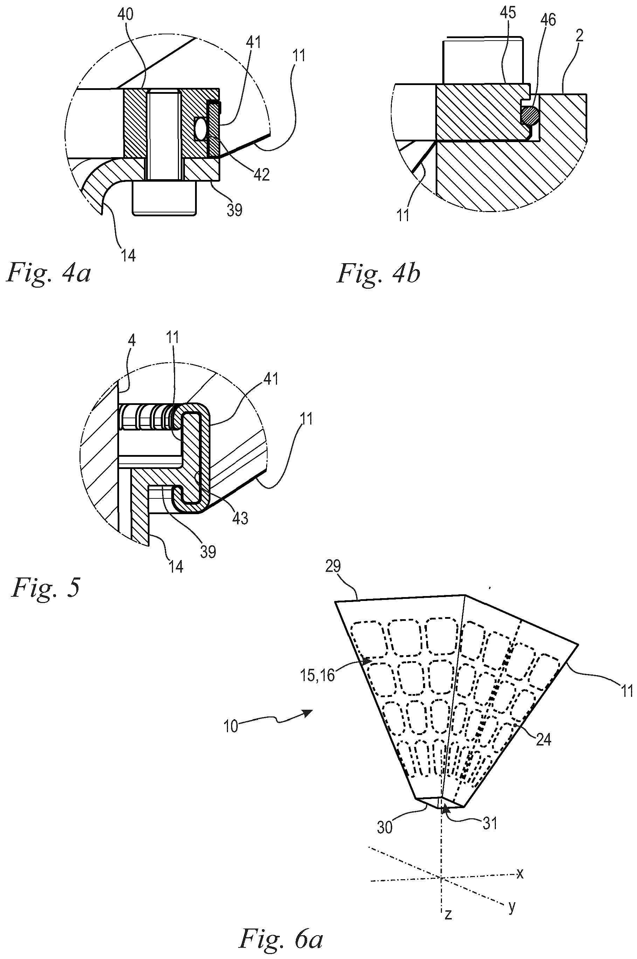

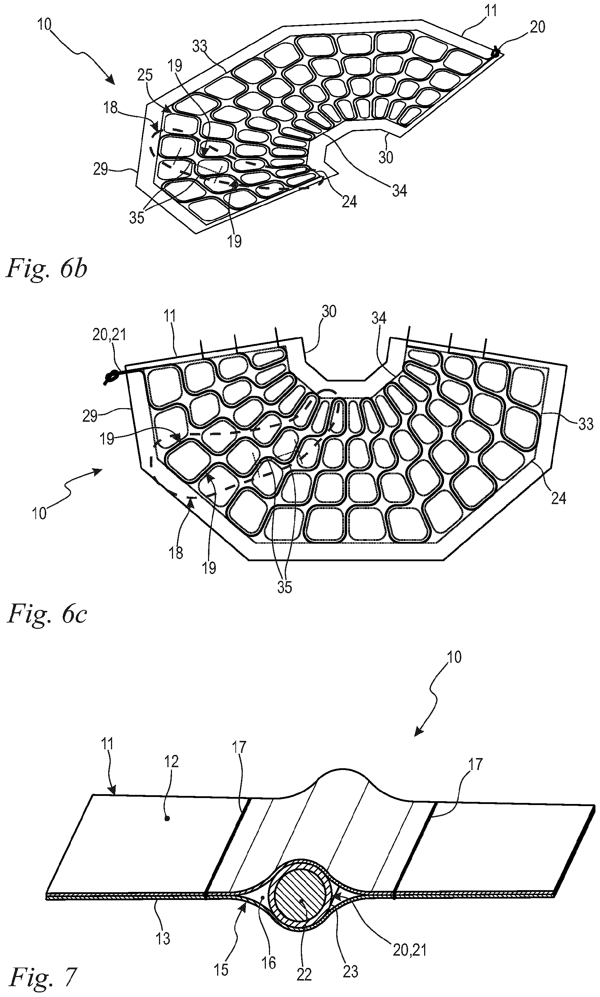

In den Figuren 6a bis 6c ist schematisch ein Ausführungsbeispiel des erfindungsgemäßen Faltenbalgs 10 gezeigt. Wie in Figur 6a gezeigt, weist der Faltenbalg 10 einen dreidimensionalen Körper auf. In dieser Ausführung ist der Faltenbalg 10 pyramidenartig ausgebildet. Der Faltenbalg 10 entspricht lediglich der Mantelfläche einer Pyramide. In den Figuren 6b und 6c ist der Faltenbalg 10 in abgewickeltem Zustand gezeigt.

Wie in Fig. 6a gezeigt, erstreckt sich der Faltenbalg 10 von einem ersten Ende 29 bis zu einem zweiten Ende 30. An seinem ersten Ende 29 ist der Faltenbalg 10 an der Bearbeitungsmaschine 1 feststehend zum Gehäuse 2 der Bearbeitungsmaschine 1 befestigt. An seinem zweiten Ende 30 ist der Faltenbalg 10 an dem bewegbaren Bauteil, vorliegend der Spindeleinheit 4, der Bearbeitungsmaschine 1 befestigt. Der Faltenbalg 10 umfasst insbesondere eine Durchgangsöffnung 31, die insbesondere an dem zweiten Ende 30 des Faltenbalgs 10 ausgebildet ist. Das bewegbare Bauteil, insbesondere die Spindeleinheit 4, ragt durch die Durchgangsöffnung 31. Das bewegbare Bauteil, insbesondere die Spindeleinheit 4, ragt von einem Raum, insbesondere von dem Antriebsraum 28, durch die Durchgangsöffnung 31 in den anderen Raum, insbesondere in den Bearbeitungsraum 27. In der vorliegenden Ausführung des Faltenbalgs entspricht das erste Ende 29 des Faltenbalgs 10 dem Ende der Mantelfläche, das an einer Grundfläche der Pyramide anliegt. Das zweite Ende 30 des Faltenbalgs 10 entspricht dem Ende der Mantelfläche, das an einer Deckfläche der Pyramide anliegt.

Wie in den Figuren 6a bis 6c gezeigt, umfasst der Faltenbalg 10 eine Membran 11. Die "Membran" ist im Sinne der vorliegenden Erfindung eine dünne Trennschicht, die die Fähigkeit zur Abtrennung besitzt und eine selektive Durchlässigkeit aufweist. Vorliegend ist die Membran 11 insbesondere derart ausgebildet, dass diese undurchlässig gegenüber Schmutzpartikeln, wie Spänen und Schleifstaub, ist. Die Bearbeitungsmaschine 1 kann auch derart ausgebildet sein, dass eine Nassbearbeitung vorgenommen werden kann. In einer solchen Ausführung ist die Membran 11 insbesondere undurchlässig gegenüber Flüssigkeiten, wie Wasser, Kühlflüssigkeit oder dgl. Flüssigkeit. Somit wird sichergestellt, dass in den Antriebsraum 28 keine Flüssigkeiten eintreten und die Antriebseinheit sowie Elektronik beschädigen.

Die Membran 11 ist insbesondere mindestens zweidimensional verformbar. Besonders vorteilhaft ist die Membran 11 mindestens dreidimensional verformbar. In der vorliegenden Ausführung ist die Membran 11 des Faltenbalgs 10 6-dimensional verformbar. Somit kann die Membran 11 in alle Raumrichtungen translatorisch verformt werden, wie auch rotatorisch eingedreht werden, ohne dabei beschädigt zu werden.

Wie in den Figuren 6b und 6c gezeigt, umfasst der Faltenbalg 10 ein elastisches Spannmittel 20. Das elastische Spannmittel 20 ist separat von der Membran 11 ausgebildet. Das elastische Spannmittel 20 ist derart mit der Membran 11 wirkverbunden, dass die Membran 11 durch das elastische Spannmittel 20 gerafft wird.

In Fig. 7 ist ein schematischer Ausschnitt des Faltenbalgs 10 gezeigt, in welchem die Membran 11 und das elastische Spannmittel 20 dargestellt sind. Die Membran 11 umfasst mindestens eine erste Membranlage 12. Die erste Membranlage 12 ist insbesondere aus einem Flächenmaterial gebildet. In der vorliegenden Ausführung des Faltenbalgs 10 umfasst die Membran 11 neben der ersten Membranlage 12 eine zweite Membranlage 13. Die zweite Membranlage 13 ist insbesondere aus einem Flächenmaterial gebildet. In einer alternativen Ausführung des Faltenbalgs 10 kann es auch vorgesehen sein, dass die Membran 11 mehr als zwei Membranlagen aufweist.

Die erste Membranlage 12 ist insbesondere aus einem textilen Flächenmaterial, beispielsweise einem Gewebe, insbesondere einem Ripstop-Gewebe, einem Gewirke, einem Gestrick oder dgl., gebildet. Die Wahl des textilen Flächenmaterials hat insbesondere Auswirkungen auf die Dehnbarkeit der Membranlage und deren Durchlässigkeit. Selbstverständlich werden Eigenschaften wie die Dehnbarkeit und die Durchlässigkeit des textilen Flächenmaterials durch weitere Parameter, wie Werkstoff, Maschenweite oder Fadenstärke, beeinflusst. Alternativ kann die erste Membranlage 12 auch als Folie ausgebildet sein.

Die zweite Membranlage 13 ist insbesondere aus einem textilen Flächenmaterial, beispielsweise einem Gewebe, insbesondere einem Ripstop-Gewebe, einem Gewirke, einem Gestrick oder dgl., gebildet. Alternativ kann die zweite Membranlage 13 auch als Folie ausgebildet sein. Auch weitere Membranlagen können analog der ersten Membranlage und/oder der zweiten Membranlage aus verschiedenen Flächenmaterialen gebildet sein. Die erste Membranlage 12 und die zweite Membranlage 13 der Membran 11 können aus dem gleichen Flächenmaterial bestehen. Die erste Membranlage 12 und die zweite Membranlage 13 der Membran 11 können aus verschiedenen Flächenmaterialen gebildet sein. So kann beispielsweise die erste Membranlage 12 aus einem textilen Flächenmaterial und die zweite Membranlage 13 aus einer Folie zur Abdichtung gegenüber Flüssigkeiten gebildet sein. Die erste Membranlage 12 und die zweite Membranlage 13 können insbesondere gleiche oder auch verschiedene Abmaße aufweisen. Es kann beispielsweise vorgesehen sein, dass auf einer einzigen ersten Membranlage 12 mehrere, voneinander getrennte, zweite Membranlagen 13 vorgesehen sind.

Bevorzugt ist die Membran 11 mit einer Beschichtung versehen. Die Beschichtung ist insbesondere derart ausgebildet, dass dadurch beispielsweise die Verschleißfestigkeit der einen und/oder der mehreren Membranlagen 12, 13 begünstigt wird. Ferner kann eine solche Beschichtung die Entflammbarkeit reduzieren und/oder antistatisch wirken. Die Beschichtung kann auch derart ausgebildet sein, dass die Dichtigkeit der Membran 11 erhöht wird. So kann beispielsweise eine Beschichtung zur Dichtigkeit gegenüber einer Flüssigkeit auf der Membran 11 vorgesehen sein. In einer solchen Ausführung ist die Beschichtung vorzugsweise auf der dem Bearbeitungsraum 27 zugewandten Seite der Membran 11 ausgebildet. Die Beschichtung kann auch derart ausgebildet sein, dass die Membran 11 eine Dichtigkeit gegenüber Staubpartikeln oder Luft aufweist. Die Beschichtung kann auch als Schutz vor Umwelteinflüssen auf der Membran 11 ausgebildet sein. Derartige Umwelteinflüsse können beispielsweise UV-Licht, Wärme oder Feuchtigkeit sein.

Wie in Fig. 7 gezeigt, umfasst der Faltenbalg 10 das elastische Spannmittel 20. Das elastische Spannmittel 20 ist derart an der Membran 11 angeordnet und mit dieser wirkverbunden, dass die Membran 11 durch das elastische Spannmittel 20 gerafft wird.

In der vorliegenden Ausführung umfasst der Faltenbalg 10 eine Halteeinheit 15, über die das elastische Spannmittel 20 an der Membran 11 gehalten ist. Die Halteeinheit 15 entspricht vorliegend einem Tunnelzug 16, in dem das elastische Spannmittel 20 angeordnet, insbesondere geführt, ist. Der Tunnelzug 16 ist aus der ersten Membranlage 12 und der zweiten Membranlage 13 sowie aus deren Verbindung 17 miteinander gebildet. Die Verbindung 17 von der ersten Membranlage 12 und von der zweiten Membranlage 13 ist bevorzugt durch eine Naht gebildet. Die Verbindung 17 kann alternativ auch durch eine Klebung, eine Schweißung, eine Nietung oder dgl. Verbindung gebildet sein.

Bevorzugt ist das elastische Spannmittel 20 insbesondere vollständig gleitend in der Halteeinheit 15, insbesondere in dem Tunnelzug 16, angeordnet. Das elastische Spannmittel 20 kann sich somit relativ zur Membran 11 entlang der Halteeinheit 15 bewegen. Alternativ kann das elastische Spannmittel 20 auch an einer oder mehreren Stellen entlang der Halteeinheit 15, insbesondere entlang des Tunnelzuges 16, fixiert sein, so dass eine Relativbewegung zwischen dem elastischen Spannmittel 20 und der Membran 11 zumindest an den Fixierstellen unterbunden ist.

Das elastische Spannmittel 20 ist bevorzugt mindestens ein Gummiband 21. Das Gummiband 21 ist bevorzugt im Tunnelzug, insbesondere vollständig verschiebbar, gehalten. Wie insbesondere in den Figuren 6b und 6c gezeigt, ist das elastische Spannmittel 20 insbesondere aus lediglich einem einzigen Gummiband 21 gebildet. Das Gummiband 21 ist bevorzugt an seinen Enden miteinander verknotet. Alternativ kann das Gummiband 21 an seinen Enden auch an der Membran 11 oder an sich selbst befestigt sein. In einer alternativen Ausführung kann es auch vorgesehen sein, dass das elastische Spannmittel 20 aus mehreren Gummibändern 21 gebildet ist.

Wie in Fig. 7 gezeigt, umfasst das Gummiband 21 einen elastischen Kern 22 und eine Ummantelung 23 des elastischen Kerns 22. Die Ummantelung 23 ist als Überlastschutz des elastischen Kerns 22 ausgebildet. Somit wird vermieden, dass der elastische Kern 22 überdehnt wird und/oder reißt. Zugleich ist die Ummantelung 23 zum Abgleiten auf der Halteeinheit 15 und/oder auf der Membran 11 ausgebildet. Ferner dient die Ummantelung 23 als Scheuerschutz für den elastischen Kern 22.

Die Figuren 6a, 8a und 9a zeigen Ausführungen der Membran 11 des Faltenbalgs 10, in der die Membran 11 die Form eines Pyramidenstumpfes aufweist. Abweichend von einer klassischen Pyramidenform können die Enden 29, 30 der Membran 11 anstelle einer viereckigen Form auch eine dreieckige Form aufweisen. Somit wären die durch die Mantelfläche der Membran 11 eingeschlossenen Grundfläche und Deckfläche viereckig respektive dreieckig. Auch eine andere Anzahl an Ecken ist denkbar. In einer alternativen Ausführung weist die Membran 11 die Form eines Kegelstumpfes auf. Die Enden 29, 30 der Membran 11 können anstelle einer runden Form auch eine elliptische Form aufweisen. Somit wären die durch die Mantelfläche der Membran 11 eingeschlossene Grundfläche und Deckfläche rund respektive elliptisch. Es kann auch vorgesehen sein, dass die Membran 11 teilweise pyramidenförmig und teilweise kegelförmig ausgebildet ist. So kann beispielsweise eines der beiden Enden 29, 30 der Membran 11 eckig und das andere der beiden Enden 29, 30 rund oder elliptisch ausgebildet sein. Die Form der Membran 11 ist bevorzugt dreidimensional. Die konkrete Ausgestaltung der Form der Membran 11 kann sich bevorzugt auch nach der Ausgestaltung der Bearbeitungsmaschine 1 und deren Anbindungspunkte für den Faltenbalg 10 richten.

Wie in Fig. 7 gezeigt, ist die Halteeinheit 15 bevorzugt als Tunnelzug 16 ausgebildet. In alternativer Ausführung kann es auch vorgesehen sein, dass die Halteeinheit 15 als eine Anordnung mehrerer Ösen, Schlaufen oder dgl. gebildet ist, in welchen das elastische Spannmittel 20 an der Membran 11 gehalten ist. Die genannten Ausführungen der Halteeinheit 15 können selbstverständlich miteinander kombiniert werden. Die Anordnung der mehreren Ösen, Schlaufen oder dgl. sind an der Membran 11, insbesondere an der ersten Membranlage 12, befestigt. Umfasst die Membran 11 mehrere Membranlagen 12, 13, kann die Anordnung der mehreren Ösen, Schlaufen oder dgl. an einer der mehreren Membranlagen 12, 13 oder an mehreren Membranlagen 12, 13 vorgesehen sein.

Es kann alternativ auch vorgesehen sein, das elastische Spannmittel 20 unmittelbar in der Membran 11, insbesondere in einer Membranlage 12 der Membran 11, zu halten. Ist beispielsweise eine Membranlage 12 als ein Gewirke ausgebildet, so kann das elastische Spannmittel 20 innerhalb des Gewirkes geführt sein. In diesem Fall ist keine separate Halteeinheit 15 erforderlich.

Der in Fig. 7 gezeigte Tunnelzug 16 ist durch die erste Membranlage 12, die zweite Membranlage 13 und deren Verbindung 17 gebildet. Der Tunnelzug 16 kann insbesondere auch an lediglich einer Membranlage 12, 13 ausgebildet sein. Eine solche Ausführung wird dann bevorzugt, wenn die Membran 11 ohnehin nur eine Membranlage umfasst. Der Tunnelzug 16 ausgebildet an lediglich einer Membranlage 12, 13 kann jedoch auch dann zweckmäßig sein, wenn die Membran 11 mehrere Membranlagen 12, 13 umfasst, beispielsweise ein textiles Flächenmaterial kombiniert mit einer Folie. Der Tunnelzug 16 kann insbesondere aus mehreren Abschnitten bestehen. Die mehreren Abschnitte können miteinander verbunden sein oder auch voneinander getrennt ausgebildet sein.

Wie bereits oben beschrieben, weist die Membran 11 des Faltenbalgs 10, wie auch in den Figuren 6a, 8a und 9a gezeigt, bevorzugt die Form eines dreidimensionalen Körpers auf. Das elastische Spannmittel 20 sowie insbesondere die Halteeinheit 15 sind derart ausgebildet, dass die Membran 11 insbesondere dreidimensional gerafft wird. Je nach Position des bewegbaren Bauteils der Bearbeitungsmaschine 1, vorliegend der Spindeleinheit 4, an welchem die Membran 11 angebunden ist, faltet sich die Membran in gewissen Membranabschnitten aus. In anderen Abschnitten entsteht ein Membranüberschuss. Dieser Membranüberschuss wird durch das elastische Spannmittel 20 gerafft. Durch die dreidimensionale Raffung wird vermieden, dass überschüssige Membranabschnitte in den Bearbeitungsraum 27 und/oder den Antriebsraum 28 ragen und mit dem Werkstück oder Bauteilen der Bearbeitungsmaschine 1 kollidieren.

Zur Erzeugung einer dreidimensionalen Raffung wird das elastische Spannmittel 20 durch die Halteeinheit 15 dreidimensional an der Membran 11 geführt. Zum besseren Verständnis ist in Fig. 2 ein Maschinenkoordinatensystem gezeigt, welches in gleicher Form auf Fig. 6a übertragen ist. Die Membran 11 nach Fig. 6a befindet sich in einem nicht gerafften Zustand. Der Faltenbalg 10 umfasst eine Führung 25 zur Führung des elastischen Spannmittels 20 entlang der Membran 11. Die Führung 25 ist vorliegend durch die Halteeinheit 15, insbesondere durch den Tunnelzug 16, gebildet. Wie in den Figuren 6b und 6c gezeigt, erstreckt sich die Führung 25 entlang der Membran 11 in alle Raumrichtungen, wodurch auch das elastische Spannmittel 20 in allen Raumrichtungen verläuft. Zieht sich das elastische Spannmittel 20 zusammen, wird die Membran 11 in alle Raumrichtungen, also dreidimensional, gerafft. Besonders bevorzugt verläuft die Führung 25 möglichst gleichmäßig in allen Raumrichtungen, so dass auch die Raffung der Membran 11 möglichst gleichmäßig erfolgt.

Um eine effektive Raffung der Membran 11 zu bewirken, verläuft die Führung, insbesondere der Tunnelzug 16, in mäanderförmigen Bahnen 18, wie in den Figuren 6b und 6c gezeigt. Die mäanderförmigen Bahnen 18 verlaufen ebenfalls in alle Raumrichtungen, um eine gleichmäßige Raffung der Membran zu bewirken.

Wie in den Figuren 6a bis 6c gezeigt, umfasst die Membran 11 einen Führungsabschnitt 24, in dem die Führung 25 verläuft. Der Führungsabschnitt 24 erstreckt sich insbesondere in Z-Richtung von einem ersten Ende 33 bis zu einem zweiten Ende 34. Das erste Ende 33 des Führungsabschnittes 24 ist dem ersten Ende 29 des Faltenbalgs 10 zugewandt. Das zweite Ende 34 des Führungsabschnittes 24 ist dem zweiten Ende 30 des Faltenbalgs 10 zugewandt. Das erste Ende 33 des Führungsabschnittes 24 ist insbesondere benachbart zum ersten Ende 29 des Faltenbalgs 10 ausgebildet. Das zweite Ende 34 des Führungsabschnittes 24 ist insbesondere benachbart zum zweiten Ende 30 des Faltenbalgs 10 ausgebildet. Die mäanderförmigen Bahnen 18 verlaufen zwischen dem ersten Ende 33 des Führungsabschnittes 24 und dem zweiten Ende 34 des Führungsabschnittes 24 hin und her, wodurch sich die Führung 25, insbesondere der Tunnelzug 16, in Z-Richtung erstreckt.

Um eine Erstreckung der Führung 25 in X- und Y-Richtung zu erzielen, verlaufen die einzelnen Teilabschnitte 19 der mäanderförmigen Bahnen 18 in alternierenden Kurven 35. Ein einzelner Teilabschnitt 19 der mäanderförmigen Bahn 18 erstreckt sich von dem ersten Ende 33 bis zum zweiten Ende 34 des Führungsabschnittes 24. Die alternierenden Kurven 35 bewirken eine Erstreckung der Führung 25 in X- und Y-Richtung bezüglich des Maschinenkoordinatensystems.

In der vorliegenden Ausführung nach den Figuren 6a bis 6c verlaufen die Teilabschnitte 19 der mäanderförmigen Bahnen 18 der Führung 25 zwischen dem ersten Ende 33 und dem zweiten Ende 34 des Führungsabschnittes 24 schräg auf der Mantelfläche der Membran 11. In Verbindung mit den alternierenden Kurven 35 der mäanderförmigen Bahnen 18 entsteht somit ein treppenartiges Muster auf der Membran 11, über das sich die Führung 25, und damit auch das elastische Spannmittel 20, insbesondere das Gummiband 21, entlang der Membran 11 erstreckt. Da dieses treppenförmige Muster der Führung 25 die dreidimensionale Membran 11 umgibt, erstreckt sich auch die Führung 25 in alle Raumrichtungen, wodurch auch die Raffung der Membran 11 in allen Raumrichtungen erfolgt.

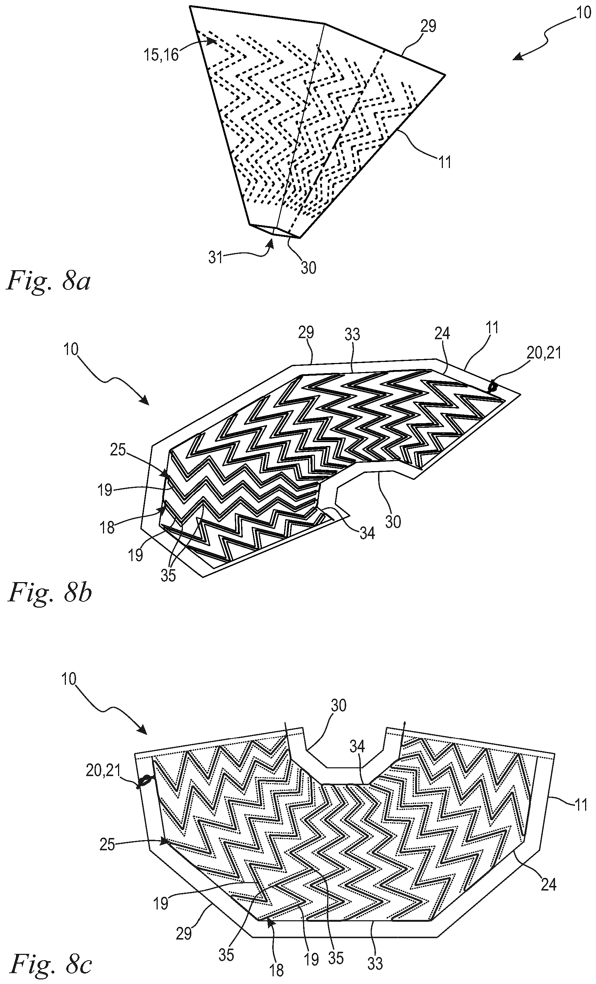

In den Figuren 8a bis 8c ist eine weitere Ausführung des Faltenbalgs 10 gezeigt, die sich von der vorher beschriebenen Ausführung lediglich in der Ausgestaltung der Führung 25 unterscheidet. Die mäanderförmigen Bahnen 18 verlaufen weniger schräg über die Mantelfläche der Membran 11. Die alternierenden Kurven 35 je Teilabschnitt 19 der mäanderförmigen Bahn 18 sind deutlich enger ausgebildet, wodurch eine Art ZickZack-Muster auf der Membran 11 entsteht.

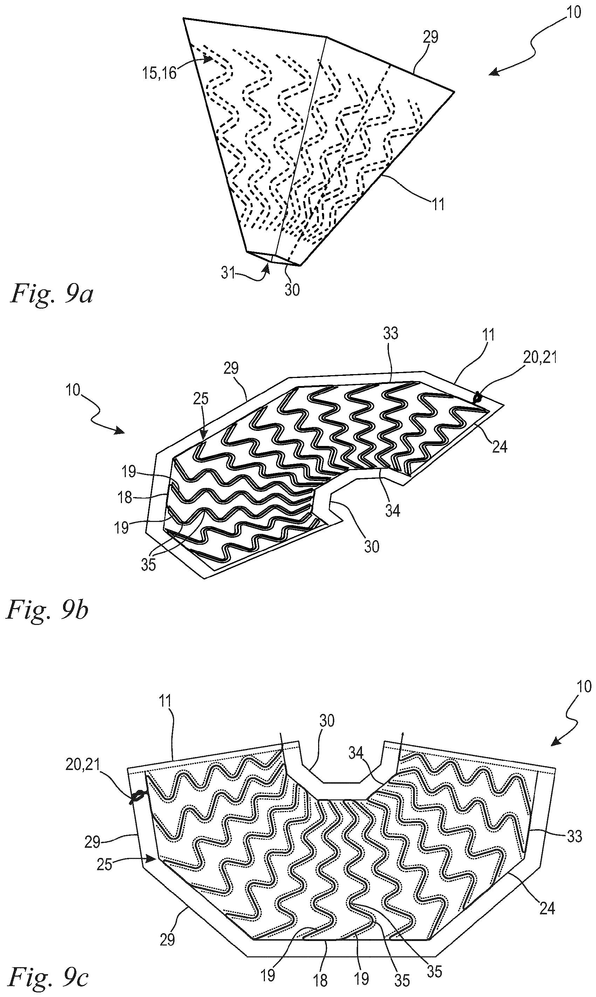

In den Figuren 9a bis 9b ist eine zusätzliche Ausführung des Faltenbalgs 10 gezeigt. Diese Ausführung unterscheidet sich gegenüber der Ausführung nach den Figuren 8a bis 8c in der Ausgestaltung der alternierenden Kurven 35. Die alternierenden Kurven 35 nach den Figuren 9a bis 9c sind weniger eng als die alternierenden Kurven 35 nach den Figuren 8a bis 8c. Somit bilden die alternierenden Kurven 35 je Teilabschnitt 19 der mäanderförmigen Bahn 18 vielmehr ein schlangenlinienförmiges Muster als ein Zickzack-Muster.

Auch andere Ausgestaltungen der Führung 25 können zweckmäßig sein, sofern sich die Führung 25 in alle Raumrichtungen erstreckt und eine effektive Raffung der Membran 11 in allen Raumrichtungen gewährleistet ist.

Wie in Fig. 3 gezeigt, umfasst der Faltenbalg 10 bevorzugt eine Aufnahme 14 zur Anbindung der Membran 11 an das bewegbare Bauteil, vorliegend an die Spindeleinheit 4, der Bearbeitungsmaschine 1. Die Aufnahme 14 ist an dem zweiten Ende 30 der Membran 11 angeordnet. Vorliegend ist die Aufnahme 14 formsteif ausgebildet. Die Aufnahme 14 ist vorliegend becherförmig ausgebildet. Die Aufnahme 14 ist vorzugsweise aus einem Kunststoff gebildet. Die Aufnahme 14 weist eine Öffnung 36, insbesondere an ihrem Becherboden, auf. Über die Öffnung 36 wird die Aufnahme 14 auf das bewegbare Bauteil aufgesteckt. Das bewegbare Bauteil weist vorzugsweise eine Schulter 37 auf, an der der Becherboden 38 anliegt. Die Aufnahme 14 ist über ihren Becherboden 38 vorzugsweise mit dem bewegbaren Bauteil, insbesondere mittels einer Schraubverbindung, fest verbunden.

In den Figuren 4a und 5 sind zwei verschieden Ausführungen gezeigt, wie die Membran 11 des Faltenbalgs 10 an der Aufnahme 14 befestigt ist. In der Ausführung nach Figur 4a ist die becherförmige Aufnahme 14 über einen Becherrand 39 mit einem Haltering 40 verbunden. An dem Haltering 40 ist die Membran 11 insbesondere über einen Klemmring 41 geklemmt gehalten. Vorzugsweise ist umfangsseitig auf dem Haltering 40 eine Dichtung 42 vorgesehen. Die Dichtung 42 ist bevorzugt als ein O-Ring ausgebildet. Die Dichtung 42 kontaktiert ferner die Membran 11. Somit kann sichergestellt werden, dass zwischen dem Haltering 40 und der Membran 11 keine Späne, Staub oder Flüssigkeit übertreten kann. Ferner wird somit die Klemmung verbessert.

Nach der Ausführung nach Fig. 5 umfasst die Aufnahme 14 an ihrem Becherrand 39 einen Steg 43. Der Steg 43 ist insbesondere T-förmig ausgebildet. Auf den Steg 43 ist der Klemmring 41 aufgeklipst. Zwischen dem Klemmring 41 und dem Steg 43 der Aufnahme 14 ist die Membran 11 gehalten. Da der Klemmring 41 den Steg 43 an seinen beiden T-Schenkeln umgreift, ist eine ausreichende Dichtigkeit zwischen Aufnahme 14 und der Membran 11 sichergestellt. Der Klemmring 41 ist elastisch ausgebildet. Es kann auch vorgesehen sein, dass an dem zweiten Ende 30 der Membran 11 ein Keder vorgesehen ist, über den die Membran 11 formschlüssig an der Aufnahme 14 gehalten ist.

Wie in den Figuren 2 und 3 gezeigt, ist der Faltenbalg 10 an seinem ersten Ende 29 insbesondere an einem feststehenden Teil der Bearbeitungsmaschine 1 befestigt. Vorliegend umfasst die Bearbeitungsmaschine 1 hierfür einen Klemmrahmen 45. Der Klemmrahmen 45 kann eine oder mehrere Klemmleisten umfassen. Vorliegend ist der Klemmrahmen 45 aus zwei Klemmleisten gebildet. Die Klemmleisten sind über Schraubverbindungen an dem Gehäuse 2 der Bearbeitungsmaschine 1 angeschraubt. Wie in Fig. 4a gezeigt, ist die Membran 11 zwischen dem Klemmrahmen 45 und dem Gehäuse 2 geklemmt gehalten. Bevorzugt ist am ersten Ende 29 der Membran 11 ein umlaufender Keder 46 vorgesehen, insbesondere eingenäht. Dieser ist zwischen dem Klemmrahmen 45 und dem Gehäuse 2 geklemmt gehalten, wodurch dieser als Dichtung analog einem O-Ring dient. Der Keder 46 ist zu Teilen vorzugsweise in einer Nut des Klemmrahmens 45 und/oder des Gehäuses 2 angeordnet, wodurch der Keder 46 selbst formschlüssig gehalten ist. Dadurch ist die Membran 11 an ihrem ersten Ende 29 sicher an dem Gehäuse 2 angebunden. Alternativ kann der Saum der Membran 11 mit Ringösen oder dgl. versehen sein, um über Schrauben, Haken oder dgl. an das Gehäuse 2 fixiert zu werden.

## Patentansprüche

1. Faltenbalg (10) zur Trennung zweier Räume, insbesondere in einer Bearbeitungsmaschine (1), insbesondere in einer Dentalbearbeitungsmaschine, wobei der Faltenbalg (10) eine Membran (11) und ein von der Membran (11) separat ausgebildetes, elastisches Spannmittel (20) umfasst,
wobei die Membran (11) mindestens zweidimensional verformbar ist, wobei der Faltenbalg (10) eine Aufnahme (14) zur Anbindung der Membran (11) an ein bewegbares Bauteil, insbesondere der Bearbeitungsmaschine (1), aufweist,
wobei das elastische Spannmittel (20) derart mit der Membran (11) wirkverbunden ist, dass die Membran (11) durch das elastische Spannmittel (20) gerafft wird.

2. Faltenbalg nach Anspruch 1,
**dadurch gekennzeichnet, dass** die Membran (11) mindestens eine erste Membranlage (12) umfasst, wobei die erste Membranlage (12) insbesondere aus einem Flächenmaterial, insbesondere einem textilen Flächenmaterial oder einer Folie, ausgebildet ist.

3. Faltenbalg nach Anspruch 2,
**dadurch gekennzeichnet, dass** die Membran (11) mindestens eine zweite Membranlage (13) umfasst, wobei die zweite Membranlage (13) insbesondere aus einem Flächenmaterial, insbesondere einem textilen Flächenmaterial oder einer Folie, ausgebildet ist.

4. Faltenbalg nach Anspruch 3,
**dadurch gekennzeichnet, dass** die mindestens eine erste Membranlage (12) und/oder die mindestens eine zweite Membranlage (13) pyramidenstumpfartig oder kegelstumpfartig ausgebildet ist.

5. Faltenbalg nach einem der Ansprüche 2 bis 4,
**dadurch gekennzeichnet, dass** die Membran (11) eine Halteeinheit (15) umfasst, über die das elastische Spannmittel (20) an der ersten Membranlage (12) und/oder der zweiten Membranlage (13) gehalten ist.

6. Faltenbalg nach Anspruch 5,
**dadurch gekennzeichnet, dass** die Halteeinheit (15) ein Tunnelzug (16) ist, wobei insbesondere der Tunnelzug (16) durch eine bevorzugt als Naht ausgebildete Verbindung (17) der ersten Membranlage (12) und der zweiten Membranlage (13) gebildet ist.

7. Faltenbalg nach Anspruch 6,
**dadurch gekennzeichnet, dass** der Tunnelzug (16) mäanderförmige Bahnen (18) aufweist.

8. Faltenbalg nach einem der Ansprüche 1 bis 6,
**dadurch gekennzeichnet, dass** das elastische Spannmittel (20) ein Gummiband (21), insbesondere lediglich ein einziges Gummiband (21) ist, wobei das Gummiband (21) im Tunnelzug (16) verschiebbar gehalten ist.

9. Faltenbalg nach Anspruch 8,
**dadurch gekennzeichnet, dass** das Gummiband (21) einen elastischen Kern (22) und eine Ummantelung (23) des elastischen Kerns (22) umfasst, wobei die Ummantelung (23) als Überlastschutz des elastischen Kerns (22) und zum Abgleiten auf der Halteeinheit (15), auf der mindestens einen ersten Membranlage (12) und/oder auf der mindestens einen zweiten Membranlage (13) ausgebildet ist.

10. Faltenbalg nach einem der Ansprüche 1 bis 9,
**dadurch gekennzeichnet, dass** die Aufnahme (14) des Faltenbalgs (10) becherförmig ausgebildet ist.

11. Bearbeitungsmaschine (1), insbesondere Dentalbearbeitungsmaschine, umfassend
- eine Werkzeugaufnahme zum Halten eines Werkzeuges, wobei das Werkzeug zur additiven und/oder subtraktiven Bearbeitung eines Werkstückes (50) vorgesehen ist,
- einen Antriebsraum (28) mit einer Antriebseinheit zur Bewegung der Werkzeugaufnahme und/oder zur Bewegung des Werkzeuges,
- einen Bearbeitungsraum (27), in dem das Werkstück (50) bearbeitet wird,
- einen Faltenbalg (10) nach einem der Ansprüche 1 bis 9, wobei der Faltenbalg (10) den Antriebsraum (28) und den Bearbeitungsraum (27) voneinander trennt.
